(19) Europäisches Patentamt
European Patent Office
Office européen des brevets

(11) **EP 4 213 170 A1**

(12) **EUROPEAN PATENT APPLICATION**
published in accordance with Art. 153(4) EPC

(43) Date of publication:
**19.07.2023 Bulletin 2023/29**

(21) Application number: **21884467.8**

(22) Date of filing: **29.06.2021**

(51) International Patent Classification (IPC):
**H01F 27/38** $^{(2006.01)}$    **H02M 1/44** $^{(2007.01)}$

(52) Cooperative Patent Classification (CPC):
**H01F 27/28; H01F 27/33; H01F 27/38; H02M 1/44**

(86) International application number:
**PCT/CN2021/103099**

(87) International publication number:
**WO 2022/088728 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2020 CN 202011174200**

(71) Applicant: **Huawei Technologies Co., Ltd.
Shenzhen, Guangdong 518129 (CN)**

(72) Inventors:
• **YU, Peng
  Shenzhen, Guangdong 518129 (CN)**
• **REN, Jie
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **PLANAR TRANSFORMER, POWER SOURCE CONVERSION CIRCUIT, AND ADAPTER**

(57) This application provides a planar transformer, a power conversion circuit, and an adapter. A first noise cancellation winding is disposed between a primary winding and a secondary winding of the planar transformer, and a quantity of coil turns of each noise cancellation winding layer in the first noise cancellation winding is designed so that when the planar transformer is operating, an induced voltage of a noise cancellation winding coil in a first noise cancellation winding layer can be used to cancel or compensate for an induced voltage of a first secondary winding layer. In this way, common mode noise generated by the secondary winding or the primary winding is suppressed, and noise suppression performance is improved. In addition, the first noise cancellation winding is formed by means of at least two noise cancellation winding layers being connected in series, and other noise cancellation winding layers in the first noise cancellation winding that are connected in series to a first noise winding layer are used to increase an induced voltage of the first noise winding layer. Therefore, compared with the conventional technology, the first noise winding layer in this application may use a relatively small quantity of coil turns to reach a required induced voltage.

FIG. 6

EP 4 213 170 A1

## Description

## CROSS-REFERENCE TO RELATED APPLICATIONS

This application claims priority to Chinese Patent Application No. 202011174200.0, filed with the China National Intellectual Property Administration on October 28, 2020 and entitled "PLANAR TRANSFORMER, POWER CONVERSION CIRCUIT, AND ADAPTER", which is incorporated herein by reference in its entirety.

## TECHNICAL FIELD

This application relates to the field of circuit technologies, and in particular, to a planar transformer, a power conversion circuit, and an adapter.

## BACKGROUND

A switching power supply has been rapidly developed due to its advantages of high efficiency, a small size, and good output stability. However, a problem of electromagnetic interference occurring during working of the switching power supply is very prominent. The electromagnetic interference of the switching power supply mainly comes from an external interference source, turn-off and turn-on of a switching device of the switching power supply, direction recovery of a rectifier diode, and noise generated by a capacitor/an inductor/a conducting wire. These noise signals are conducted and radiated to an electrical device along a circuit network, causing the electromagnetic interference. Therefore, the switching power supply has a quite strict requirement for noise suppression.

Noise of the switching power supply is classified into differential mode noise and common mode noise. The differential mode noise mainly includes noise arising from a pulsating current of a switching converter. The common mode noise mainly includes noise flowing to a reference ground and caused due to a mutual effect between parameters of a circuit of a switching power supply. In actual engineering application, common mode noise is often a main factor that causes the electromagnetic interference. Therefore, how to reduce or even eliminate the common mode noise of the switching power supply is a problem of great concern in the industry.

## SUMMARY

This application provides a planar transformer, a power conversion circuit, and an adapter, to improve noise suppression performance.

According to a first aspect, this application provides a planar transformer, including a magnetic core and a printed circuit board PCB winding board, where the PCB winding board includes a primary winding, a secondary winding, and a first noise cancellation winding. The primary winding includes a first primary winding layer. The secondary winding includes a first secondary winding layer. The first noise cancellation winding includes at least two noise cancellation winding layers, where coils of a noise cancellation winding in the at least two noise cancellation winding layers are sequentially connected in series to form the first noise cancellation winding. A first terminal of the first noise cancellation winding is configured to connect an electric potential quiescent point of a secondary circuit of a power conversion circuit or an electric potential quiescent point of a primary circuit of the power conversion circuit, and a second terminal of the first noise cancellation winding floats. The noise cancellation winding layer on which the second terminal of the first noise cancellation winding is located is a first noise cancellation winding layer, the first noise cancellation winding layer is disposed between the first primary winding layer and the first secondary winding layer. When the first terminal of the first noise cancellation winding is configured to connect the electric potential quiescent point of the secondary circuit, the first noise cancellation winding layer is adjacent to the first primary winding layer, or when the first terminal of the first noise cancellation winding is configured to connect the electric potential quiescent point of the primary circuit, the first noise cancellation winding layer is adjacent to the first secondary winding layer.

In this embodiment of this application, the first noise cancellation winding is disposed between the primary winding and the secondary winding of the planar transformer, and a quantity of coil turns of each noise cancellation winding layer in the first noise cancellation winding is designed so that when the planar transformer is operating, an induced voltage of a noise cancellation winding coil in the first noise cancellation winding layer can be used to cancel or compensate for an induced voltage of the first secondary winding layer. In this way, common mode noise generated by the secondary winding or the primary winding is suppressed, and noise suppression performance is improved. In addition, the coils of the noise cancellation windings in the at least two noise cancellation winding layers are sequentially connected in series to form the first noise cancellation winding, and the first noise winding layer disposed between the first primary winding layer and the first secondary winding layer is the noise cancellation winding layer on which the second terminal of the first noise cancellation winding is located. In this way, noise cancellation winding coils that are of another noise cancellation winding layer in the first noise cancellation winding and that are connected in series to the first noise winding layer are used to increase the induced voltage of the noise cancellation winding coil in the first noise winding layer. Therefore, compared with the conventional technology, the first noise winding layer in this application may use a relatively small quantity of coil turns to reach a required induced voltage.

In this application, only one noise cancellation winding layer may be disposed between the first primary winding layer and the first secondary winding layer, or two or more noise cancellation winding layers may be disposed, which is not limited herein. As long as it is ensured that the first noise cancellation winding layer is disposed between the first primary winding layer and the first secondary winding layer, when the first terminal of the first noise cancellation winding is configured to connect the electric potential quiescent point of the secondary circuit, the first noise cancellation winding layer is adjacent to the first primary winding layer, or when the first terminal of the first noise cancellation winding is configured to connect the electric potential quiescent point of the primary circuit, the first noise cancellation winding layer is adjacent to the first secondary winding layer.

In this application, the primary winding may further include a second primary winding layer. The secondary winding may further include a second secondary winding layer. At least one second noise cancellation winding layer is further disposed between the second primary winding layer and the second secondary winding layer. The second noise cancellation winding layer is a noise cancellation winding layer other than the first noise cancellation winding layer in the first noise cancellation winding. That is, an induced voltage of a cancellation winding coil in the second noise cancellation winding layer is used to cancel or compensate for an induced voltage of the second secondary winding layer. In this way, common mode noise generated by the secondary winding or the primary winding is suppressed, and noise suppression performance is improved.

In a possible implementation, the second noise cancellation winding layer on which a noise cancellation winding farthest away from the first terminal is located is disposed between the second primary winding layer and the second secondary winding layer, and is adjacent to each of the second primary winding layer and the second secondary winding layer. This is because, in all second noise cancellation winding layers, at the second noise cancellation winding layer on which the noise cancellation winding farthest away from the first terminal is located, an induced voltage of the noise cancellation winding in the second noise cancellation winding layer is relatively maximum. Therefore, if a same induced voltage is required to be generated, a quantity of coil turns disposed in the second noise cancellation winding layer on which the noise cancellation winding farthest away from the first terminal is located may be minimum.

In a possible implementation, if common mode noise to be compensated for or canceled is relatively small, the second noise cancellation winding layer on which the first terminal is located may be disposed between the second primary winding layer and the second secondary winding layer, and is adjacent to each of the second primary winding layer and the second secondary winding layer.

Optionally, in this application, a coil turn width of the noise cancellation winding at the first noise cancellation winding layer is greater than that of the noise cancellation winding at the second noise cancellation winding layer. That is, a coil turn width in the noise cancellation winding layer on which the second terminal of the first noise cancellation winding is located is designed to be wider, and in comparison, a coil turn width in the noise cancellation winding layer on which the first terminal of the first noise cancellation winding is located is designed to be narrower. In this way, a quantity of coil turns of the first noise cancellation winding can be further reduced.

In a possible implementation, coil turn widths of a noise cancellation winding in the first noise cancellation winding layer are the same.

In a possible implementation, in the first noise cancellation winding layer, a coil of a noise cancellation winding closer to the second terminal has a larger coil turn width.

Optionally, in this application, the PCB winding board further includes an auxiliary winding, and the auxiliary winding is disposed on at least one second noise cancellation winding layer. Because the second noise cancellation winding layer is mainly configured to increase an induced voltage of a coil in the first noise cancellation winding layer, disposing the auxiliary winding in the second noise cancellation winding layer does not affect the first noise cancellation winding layer. In addition, a quantity of winding layers in the PCB winding board can be reduced, and space utilization of the planar transformer is improved, thereby reducing costs of the planar transformer.

In specific implementation, the auxiliary winding may be any type of winding other than the noise cancellation winding, which is not limited herein.

In this application, a relative position of the primary winding and the secondary winding may include at least the following three manners. For example, in a first manner, all primary winding layers included in the primary winding may be located on one side of all the secondary winding layers included in the secondary winding. Alternatively, in a second manner, the secondary windings may be disposed on two sides of the primary winding. To be specific, some secondary winding layers in the secondary windings are disposed on one side of the primary winding, and the other secondary winding layers in the secondary windings are disposed on the other side of the primary winding, forming a sandwiched structure similar to a "sandwich". Based on the foregoing "sandwich" structure, a high-frequency eddy current loss and leakage inductance of a winding can be reduced. Alternatively, in a third manner, the primary winding may also be disposed on both sides of the secondary winding.

According to a second aspect, this application provides a power conversion circuit, including: a primary circuit, a secondary circuit, and any planar transformer according to the first aspect, where the planar transformer is disposed between the primary circuit and the secondary circuit.

According to a third aspect, this application provides an adapter, including a housing and a power conversion circuit according to the second aspect, where the power conversion circuit is disposed in the housing.

## BRIEF DESCRIPTION OF DRAWINGS

FIG. 1 is a schematic diagram of a possible application scenario according to an embodiment of this application;

FIG. 2 is a schematic diagram of a power conversion circuit according to an embodiment of this application;

FIG. 3 is a schematic diagram of a power conversion circuit according to another embodiment of this application;

FIG. 4 is a schematic diagram of a noise suppression method according to an embodiment of this application;

FIG. 5 is a schematic cross-sectional diagram of a planar transformer provided in the related art;

FIG. 6 is a schematic diagram of a structure of a planar transformer according to an embodiment of this application;

FIG. 7 is a schematic cross-sectional diagram of a planar transformer according to another embodiment of this application;

FIG. 8 is a schematic cross-sectional diagram of a planar transformer according to still another embodiment of this application;

FIG. 9 is a schematic cross-sectional diagram of a planar transformer according to yet another embodiment of this application;

FIG. 10 is a schematic cross-sectional diagram of a planar transformer according to still yet another embodiment of this application;

FIG. 11 is a schematic cross-sectional diagram of a planar transformer according to a further embodiment of this application;

FIG. 12 is a schematic cross-sectional diagram of a planar transformer according to a still further embodiment of this application;

FIG. 13 is a schematic cross-sectional diagram of a planar transformer according to a yet further embodiment of this application;

FIG. 14 is a schematic cross-sectional diagram of a planar transformer according to a still yet further embodiment of this application;

FIG. 15 is a schematic diagram of a connection relationship between a power conversion circuit and a planar transformer according to an embodiment of this application; and

FIG. 16 is a schematic diagram of a structure of an adapter according to an embodiment of this application.

## DESCRIPTION OF EMBODIMENTS

To make the objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to persons skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

It should be noted that specific details are set forth in the following description to provide a thorough understanding of this application. However, this application can be implemented in numerous other manners different from those described herein, and persons skilled in the art can make similar inferences without departing from the connotation of this application. Therefore, this application is not limited to the specific implementations disclosed below. Example implementations of this application are subsequently described in the specification, but the description is intended to describe general principles of this application and is not intended to limit the scope of this application. The protection scope of this application is subject to the appended claims.

To facilitate understanding of the embodiments of this application, the following first describes some terms used in the embodiments of this application.

Planar transformer (planar transformer): Different from a traditional transformer structure, a magnetic core and a winding of a planar transformer are of a plane structure. The magnetic core is generally of a small-sized E-type or RM-type magnetic core structure, and the winding is generally formed through lap winding of a multi-layer printed circuit board (printed circuit board, PCB). Such design has a low direct current resistance, a small leakage inductance, and a distributed capacitance, and is very low in height, and may have a high operating frequency.

Flyback converter (flyback converter): It is widely used in alternating current/direct current (AC/DC) and direct current/direct current (DC/DC) conversion, and is a relatively common low-power switching power supply converter, and has advantages of simple structure and low cost. Core components of the flyback converter include a power switching transistor, a transformer, a diode, and a capacitor. The power switching transistor is controlled through pulse width modulation. A high-frequency square wave signal is generated in a primary coil of the transformer through switch-off and switch-on of the power switching transistor, and then the power switching transistor is inductively coupled to a secondary coil of the transformer, to implement energy transfer. A stable direct current output is obtained at an output end through filtering and rectification by a diode and a capacitor in a secondary circuit.

Common mode noise: The common mode noise is also referred to as asymmetric noise or line-to-ground noise. Such noise exists in all electrical devices using alternating current power supplies. Currents of the common mode noise flow in a same direction on two transmission lines, maintain a same phase to ground, and return through a ground cable.

Electric potential quiescent point: In a circuit network, a voltage potential amplitude of the network node keeps relatively constant during a circuit operating process, and has no high-frequency jump or oscillation. For example, for a filter capacitor located after a rectifier circuit in a primary circuit of a flyback converter and a filter capacitor located after a rectifier circuit in a secondary circuit of the flyback converter, positive electrodes or negative electrodes of these capacitors and network nodes directly connected to these positive electrodes or negative electrodes are electric potential quiescent points.

Winding layer: In a planar transformer, the winding layer is a multi-turn coil located on a same plane in a winding. The plane is perpendicular to a central axis of a magnetic core surrounded by the winding, and the multi-turn coil may be wound in parallel on a same plane from inside to outside or from outside to inside. In one winding, there may be a plurality of winding layers. Planes on which the winding layers are located are parallel to each other, and the winding layers are arranged perpendicular to the central axis of the magnetic core. Correspondingly, two adjacent winding layers means two winding layers whose planes are parallel to each other and that do not have another winding layer in between.

This application provides a planar transformer, a power conversion circuit, and an adapter. The planar transformer may be disposed in the power conversion circuit, and the power conversion circuit may be disposed in the adapter.

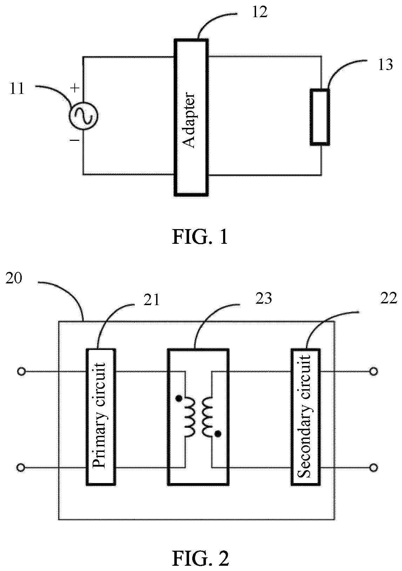

Specifically, the adapter may be applied to a scenario of charging a device or supplying power to a device. For example, FIG. 1 shows a possible application scenario according to an embodiment of this application. As shown in FIG. 1, there is an external power supply 11, an adapter 12, and a to-be-charged device 13 in the application scenario. For example, the to-be-charged device 13 may include a cellular phone, a notebook computer, a battery, and the like. This is not limited in this embodiment of this application. Usually, the adapter 12 may be connected to the external power supply 11. A power conversion circuit included in the adapter 12 is configured to: convert a relatively high voltage provided by the external power supply 11 into a relatively low voltage that satisfies a charging or power supply standard of the to-be-charged device 13, and charge the to-be-charged device 13 or supply power to the to-be-charged device 13.

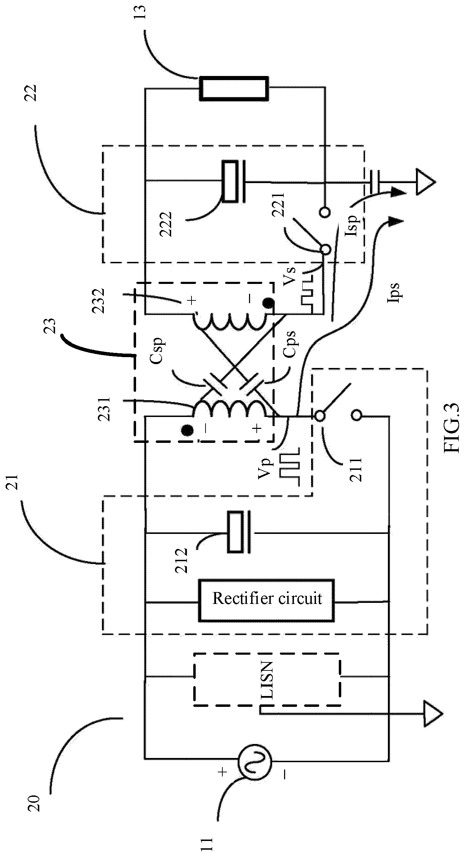

The planar transformer provided in this embodiment of this application can reduce noise generated during operation. The noise may include common mode noise. The power conversion circuit may be a switching power supply converter. For example, the switching power supply converter may include the foregoing flyback converter. The common mode noise mainly includes noise flowing to a reference ground and caused due to a mutual effect between parameters of a circuit of a switching power supply. The following describes a generation and transmission mechanism of common mode noise in a power conversion circuit 20 with reference to FIG. 2 and FIG. 3.

As shown in FIG. 2, the power conversion circuit 20 usually includes a primary circuit 21, a secondary circuit 22, and a transformer 23. As shown in FIG. 3, the primary circuit usually includes a primary switching transistor 211 and a primary filter capacitor 212. Further, the primary circuit further includes a rectifier circuit. The primary switching transistor 211 may also be referred to as a power switching transistor. The secondary circuit 22 usually includes a secondary rectifier 221 and a secondary filter capacitor 222. The transformer 23 includes a primary winding 231, a magnetic core, and a secondary winding 232. The primary winding 231 may be connected to the primary switching transistor 211 and the primary filter capacitor 212, and the secondary winding 232 may be connected to the secondary rectifier 221 and the secondary filter capacitor 222. The primary filter capacitor 212 and the secondary filter capacitor 222 are usually electrolytic capacitors.

Usually, a node connected to either of two terminals of the primary filter capacitor 212 is an electric potential quiescent point of the primary circuit, or a ground node of the primary circuit may be an electric potential quiescent point of the primary circuit. A node connected to either of two terminals of the secondary filter capacitor 222 is an electric potential quiescent point of the secondary circuit.

During operation of the power conversion circuit 20, an alternating current input by the external power supply 11 is converted into a stable high-voltage direct current after being rectified and filtered by the primary circuit 21, and is input to the primary winding 231 of the transformer 23. The primary switching transistor 211 connected to the primary winding 231 couples a voltage of the primary winding 231 to the secondary winding 232 through high-frequency switch-on and switch-off. After the voltage coupled to the secondary winding 232 is rectified and filtered by the secondary circuit 22, a low-voltage direct current is output to a load to charge or supply power to the load. The load is the to-be-charged device 13. During operation of the power conversion circuit 20, the primary switching transistor 211 generates a jump voltage Vp due to high-frequency switch-on and switch-off, and the secondary rectifier 221 generates a jump voltage Vs due to high-frequency switch-on and switch-off.

Because there is a parasitic capacitance between the primary winding 231 and the secondary winding 232 of the transformer, common mode noise is generated by the jump voltages Vp and Vs in the power conversion circuit 20 through the parasitic capacitance. Specifically, with reference to FIG. 3, the parasitic capacitance includes a distributed capacitance Cps caused by the primary winding to the secondary winding and a distributed capacitance Csp caused by the secondary winding to the primary winding. A noise current Ips flowing to the ground is generated from the jump voltage Vp of the primary circuit through Cps, and a noise current Isp flowing to the ground is generated from the jump voltage Vs of the secondary circuit through Csp. The noise current Ips and the noise current Isp are common mode noise.

How to suppress the common mode noise is one of difficulties in designing a highly competitive adapter in the industry currently.

It should be noted that FIG. 3 further shows a line impedance stabilization network (Line Impedance Stabilization Network, LISN) circuit. The LISN circuit is a test circuit and is configured to detect a common mode noise current flowing to the ground during operation of the power conversion circuit. In other words, it may be considered that a current flowing to the ground and detected by the LISN network is equivalent to common mode noise generated by the power conversion circuit.

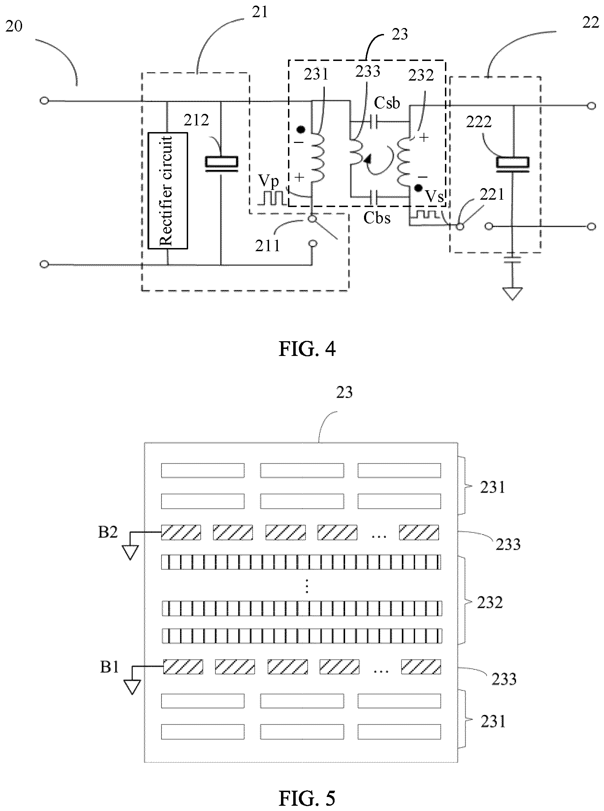

FIG. 4 is a schematic diagram of a noise suppression method in the related art. Referring to FIG. 4, in the related art, a noise cancellation winding 233 is introduced into the planar transformer 23 to generate a reverse noise current, and a magnitude of the reverse noise current is adjusted by adjusting a quantity of turns of the noise cancellation winding 233, so that the reverse noise and the original noise can cancel each other out. FIG. 5 is a schematic cross-sectional diagram of a structure of a winding in a planar transformer in the related art. As shown in FIG. 5, noise cancellation winding layers B1 and B2 each are disposed between primary winding 231 and the secondary winding 232, and Nb turns of noise cancellation windings 233 are disposed on each of the noise cancellation winding layers B1 and B2. One terminal of the noise cancellation winding 233 in each noise cancellation winding layer B1 or B2 is connected to an electric potential quiescent point of the primary circuit, and the other terminal floats.

However, in actual engineering application, a value of a quantity of turns of the noise cancellation winding is generally relatively large, and is approximately greater than 4. Too many turns bring the following disadvantages: (1) A width of a winding channel and a maximum quantity of turns of a noise cancellation winding layer are limited, which may result in an inability to provide sufficient reverse noise currents. (2) A specified processing spacing needs to be reserved between turns in the noise cancellation winding. Too many turns may lead to incomplete shielding of the primary power winding by the noise cancellation winding. Besides, more turns lead to a poorer shielding effect. (3) When a quantity of turns of the noise cancellation winding in the noise cancellation winding layer is relatively large, an accumulated tolerance of processing is relatively large, resulting in relatively poor noise consistency.

In view of the foregoing problem, an embodiment of this application provides a planar transformer with relatively low common mode noise. A power conversion circuit using the planar transformer has relatively high noise suppression performance, and a quantity of turns of a noise cancellation winding can be reduced. In addition, this application further provides a power conversion circuit to which the planar transformer is applied, and an adapter to which the power conversion circuit is applied. Specifically, for the planar transformer, the power conversion circuit, and the adapter, refer to the description in FIG. 1 to FIG. 3. For brevity, details are not described herein again.

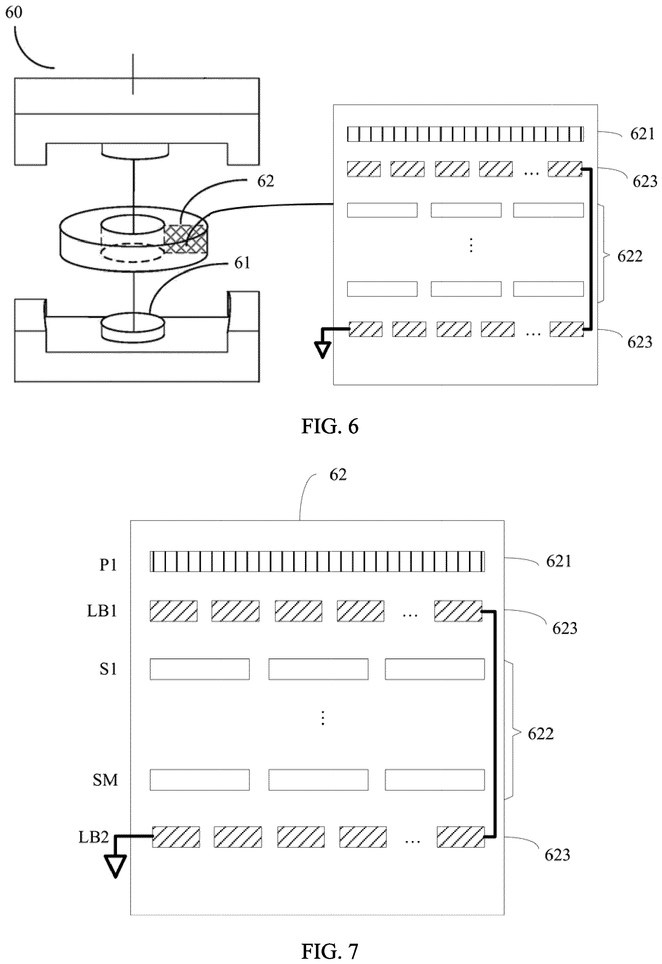

The transformer provided in this embodiment of this application mainly includes a magnetic core and a winding coil. The winding coil may be formed by winding a conventional copper wire or may be a PCB winding board formed by etching a multi-layer PCB. The PCB winding board is more flat than a winding coil formed by winding the conventional copper wire, and therefore, a transformer including the PCB winding board is usually referred to as a planar transformer. FIG. 6 is a schematic diagram of a structure of a planar transformer 60. As shown in FIG. 6, the planar transformer 60 includes a magnetic core 61 and a PCB winding board 62.

A material and a shape of the magnetic core 61 are not limited in this embodiment of this application. For example, a shape of the magnetic core 61 may be an EE type, an EI type, or an RM type as shown in FIG. 6. The PCB winding board 62 may be sleeved on a magnetic cylinder of the magnetic core 61.

As shown in FIG. 6, the PCB winding board 62 may include a primary winding 621, a secondary winding 622, and a first noise cancellation winding 623.

In this application, the primary winding 621 refers to any winding connected to a primary circuit side other than the first noise cancellation winding 623, and the secondary winding 622 refers to any winding connected to a secondary circuit side other than the first noise cancellation winding 623.

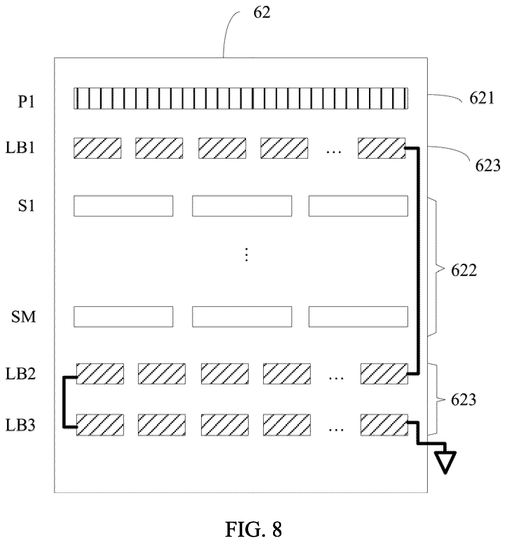

The primary winding 621 may include at least one primary winding layer. Primary winding layers included in the primary winding 621 may be denoted as P1, P2, ..., and PN, where N is an integer greater than 1. It should be noted that a cross section of the planar transformer 60 is symmetric. Therefore, FIG. 7 in this application is a schematic diagram of a half cross section of the planar transformer 60. Similarly, FIG. 8 to FIG. 14 below illustrate a schematic diagram of a half cross section of a planar transformer.

The at least one primary winding layer Pn (n = any integer from 1 to N) may be provided with a coil of a primary power winding, or may be provided with a coil of a primary auxiliary winding. The coil may be formed by using a conductive layer. Coils of the primary power winding are connected in series. The primary auxiliary winding may be a winding that provides a low-power power supply for a circuit other than a main power circuit in a power conversion circuit. The circuit other than the main power circuit may include, for example, a drive circuit, a control circuit, and a detection circuit.

The primary winding 621 may include a first primary winding layer, where at least some coils of the primary power winding may be disposed on the first primary winding layer, or at least some coils of the primary auxiliary winding may be disposed on the first primary winding layer.

The secondary winding 622 may include at least one secondary winding layer. Secondary winding layers included in the secondary winding 622 may be denoted as S1, S2, ..., and SM, where M is an integer greater than 1. Similar to the primary winding 621, coils disposed on the at least one secondary winding layer Sm (m = any integer from 1 to M) are connected in series. The at least one secondary winding layer Sm may be provided with a coil of a secondary power winding, or may be provided with a coil of a secondary auxiliary winding. The coil of the secondary auxiliary winding may be any coil other than the coil of the secondary power winding. This is not limited herein.

The secondary winding 622 may include a first secondary winding layer, where at least some coils of the secondary power winding may be disposed on the first secondary winding layer, or at least some coils of the secondary auxiliary winding may be disposed on the first secondary winding layer.

The first noise cancellation winding 623 may include at least two noise cancellation winding layers. The noise cancellation winding layers included in the first noise cancellation winding 623 may be denoted as LB 1, LB2, ..., and LBN.

Coils of a noise cancellation winding in the at least two noise cancellation winding layers are sequentially connected in series to form the first noise cancellation winding 623. For example, the first noise cancellation winding 623 includes a noise cancellation winding layer LB1 and a noise cancellation winding layer LB2. One terminal of a coil of a noise cancellation winding in the noise cancellation winding layer LB1 is connected in series to one terminal of a coil of a noise cancellation winding in the noise cancellation winding layer LB2 to form the first noise cancellation winding 623, and the formed first noise cancellation winding 623 has two terminals. A first terminal of the first noise cancellation winding 623 is configured to connect an electric potential quiescent point of a secondary circuit of the power conversion circuit or an electric potential quiescent point of a primary circuit of the power conversion circuit, and a second terminal of the first noise cancellation winding 623 floats. A noise cancellation winding layer on which the second terminal of the first noise cancellation winding 623 is located is the first noise cancellation winding layer.

It should be noted that when the first terminal of the first noise cancellation winding 623 is configured to connect the electric potential quiescent point of the secondary circuit, the first noise cancellation winding layer is disposed between a first primary winding layer Pn and a first secondary winding layer Sm, and the first noise cancellation winding layer is adjacent to the first primary winding layer Pn. When the first terminal of the first noise cancellation winding 623 is configured to connect the electric potential quiescent point of the primary circuit, the first noise cancellation winding layer is disposed between the first primary winding layer Pn and the first secondary winding layer Sm, and the first noise cancellation winding layer is adjacent to the first secondary winding layer Sm.

In this application, only one noise cancellation winding layer may be disposed between the first primary winding layer and the first secondary winding layer, or two or more noise cancellation winding layers may be disposed, which is not limited herein. As long as it is ensured that the first noise cancellation winding layer is disposed between the first primary winding layer and the first secondary winding layer, when the first terminal of the first noise cancellation winding is configured to connect the electric potential quiescent point of the secondary circuit, the first noise cancellation winding layer is adjacent to the first primary winding layer, or when the first terminal of the first noise cancellation winding is configured to connect the electric potential quiescent point of the primary circuit, the first noise cancellation winding layer is adjacent to the first secondary winding layer.

In specific implementation, only the first noise cancellation winding layer is generally disposed between the first primary winding layer and the first secondary winding layer, which is not limited herein.

It should be further noted that, that the first noise cancellation winding layer is adjacent to the first primary winding layer means that there is no other winding layer between the first noise cancellation winding layer and the first primary winding layer, and that the first noise cancellation winding layer is adjacent to the first secondary winding layer means that there is no other winding layer between the first noise cancellation winding layer and the first secondary winding layer.

In this embodiment of this application, that the second terminal of the first noise cancellation winding floats may mean that the second terminal of the first noise cancellation winding is not electrically connected to any energized conductor, or that the second terminal cannot form a closed loop with another component in the planar transformer or the power conversion circuit.

In this embodiment of this application, the first noise cancellation winding is disposed between the primary winding and the secondary winding of the planar transformer, and a quantity of coil turns of each noise cancellation winding layer in the first noise cancellation winding is designed so that when the planar transformer is operating, an induced voltage of a noise cancellation winding coil in the first noise cancellation winding layer can be used to cancel or compensate for an induced voltage of the first secondary winding layer. In this way, common mode noise generated by the secondary winding or the primary winding is suppressed, and noise suppression performance is improved. In addition, the coils of the noise cancellation windings in the at least two noise cancellation winding layers are sequentially connected in series to form the first noise cancellation winding, and the first noise winding layer disposed between the first primary winding layer and the first secondary winding layer is the noise cancellation winding layer on which the second terminal of the first noise cancellation winding is located. In this way, noise cancellation winding coils that are of another noise cancellation winding layer in the first noise cancellation winding and that are connected in series to the first noise winding layer are used to increase the induced voltage of the noise cancellation winding coil in the first noise winding layer. Therefore, compared with the conventional technology, the first noise winding layer in this application may use a relatively small quantity of coil turns to reach a required induced voltage.

Because the first noise winding layer in this application may use a relatively small quantity of coil turns to reach the required induced voltage, the planar transformer provided in this application may further achieve the following effects:

(1) A quantity of coil turns of the noise cancellation winding in the first noise cancellation winding layer is effectively reduced;
(2) Sufficient reverse noise currents can be provided in a limited quantity of winding channels of the first noise cancellation winding layer by using a relatively small quantity of noise cancellation winding turns;
(3) A quantity of coil turns of the noise cancellation winding in the first noise cancellation winding layer is reduced, so that a total distance between turns in the first noise cancellation winding layer can be reduced, thereby improving a shielding effect between the first noise cancellation winding layer and a first primary power winding layer or a first secondary power winding layer; and
(4) The quantity of coil turns of the noise cancellation winding in the first noise cancellation winding layer is reduced, so that an accumulated tolerance of processing can be reduced, and noise consistency can be improved.

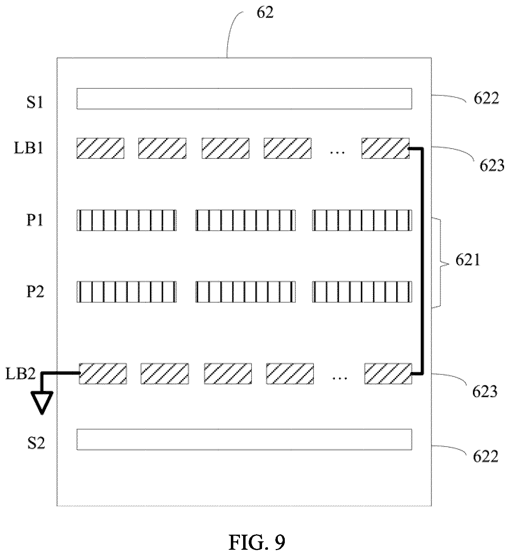

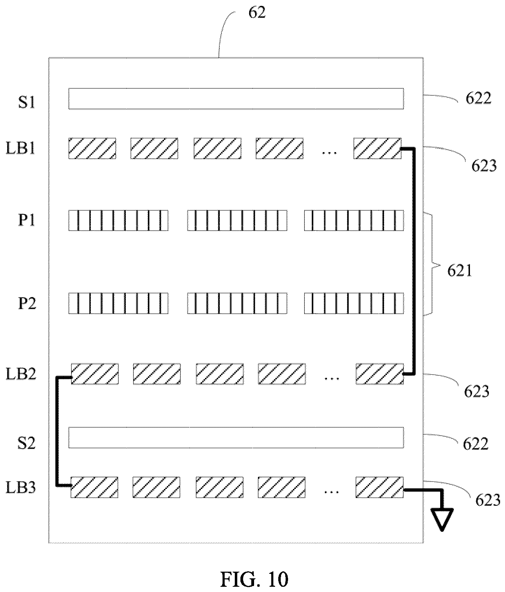

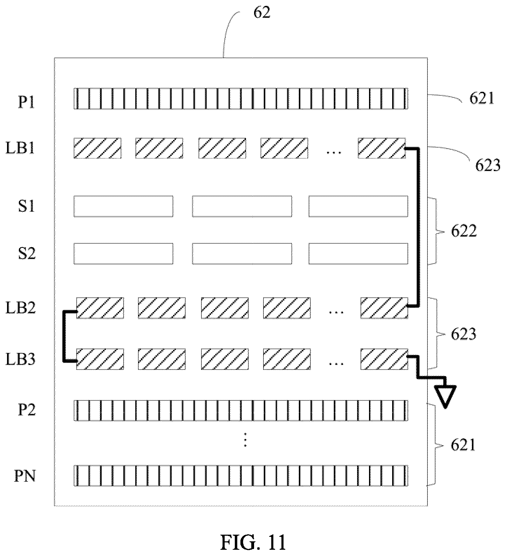

In specific implementation, in this application, a relative position of the primary winding and the secondary winding may include at least the following three manners. For example, in a first manner, as shown in FIG. 7 and FIG. 8, all primary winding layers included in the primary winding may be located on one side of all secondary winding layers included in the secondary winding. Alternatively, in a second manner, as shown in FIG. 9 and FIG. 10, the secondary windings may be disposed on two sides of the primary winding. To be specific, some secondary winding layers in the secondary windings are disposed on one side of the primary winding, and the other secondary winding layers in the secondary windings are disposed on the other side of the primary winding, forming a sandwiched structure similar to a "sandwich". Based on the foregoing "sandwich" structure, a high-frequency eddy current loss and leakage inductance of a winding can be reduced. Alternatively, in a third manner, as shown in FIG. 11, the primary windings may also be disposed on both sides of the secondary winding.

For example, as shown in FIG. 7, a primary winding layer (P) and a secondary winding layer (S) form a PS stacked structure. A first noise cancellation winding 623 includes a noise cancellation winding layer LB1 and a noise cancellation winding layer LB2. One terminal of a coil of a noise cancellation winding in the noise cancellation winding layer LB1 is connected in series to one terminal of a coil of a noise cancellation winding in the noise cancellation winding layer LB2 to form the first noise cancellation winding 623, and the formed first noise cancellation winding 623 has two terminals. A first terminal of the first noise cancellation winding 623 is configured to connect an electric potential quiescent point of a secondary circuit of the power conversion circuit or an electric potential quiescent point of a primary circuit of the power conversion circuit, and a second terminal of the first noise cancellation winding 623 floats. The noise cancellation winding layer LB1 on which the second terminal of the first noise cancellation winding 623 is located is a first noise cancellation winding layer, and the other noise cancellation winding layer LB2 is a second noise cancellation winding layer. The first noise cancellation winding layer LB1 is disposed between a first primary winding layer P1 and a first secondary winding layer S1 and is adjacent to each of the first primary winding layer P1 and the first secondary winding layer S1.

In the foregoing embodiment, when the planar transformer is operating, an induced voltage of a noise cancellation winding coil in the first noise cancellation winding layer LB1 of the first noise cancellation winding 623 can be used to cancel or compensate for an induced voltage of the first secondary winding layer S1. In this way, common mode noise generated by the secondary winding or the primary winding is suppressed, and noise suppression performance is improved. A noise cancellation winding coil of the other noise cancellation winding layer LB2 connected in series to the first noise winding layer LB1 is configured to increase the induced voltage of the noise cancellation winding coil in the first noise winding layer LB1. Therefore, the first noise winding layer in this application may use a relatively small quantity of coil turns to reach a required induced voltage.

Specifically, a quantity of layers of the second noise cancellation winding layer in the first noise cancellation winding is not limited to one, and there may also be a plurality of layers. A larger quantity of layers of the second noise cancellation winding layer indicates a higher induced voltage of the noise cancellation winding coil in the first noise winding layer, so that a quantity of turns of the noise cancellation winding coil in the first noise winding layer may be smaller.

For example, as shown in FIG. 8, a primary winding layer (P) and a secondary winding layer (S) form a PS stacked structure. A first noise cancellation winding 623 includes a noise cancellation winding layer LB1, a noise cancellation winding layer LB2, and a noise cancellation winding layer LB3. One terminal of a coil of a noise cancellation winding in the noise cancellation winding layer LB1 is connected in series to one terminal of a coil of a noise cancellation winding in the noise cancellation winding layer LB2, and the other terminal of the coil of the noise cancellation winding in the noise cancellation winding layer LB2 is connected in series to one terminal of a coil of a noise cancellation winding in the noise cancellation winding layer LB3, so as to form the first noise cancellation winding 623. The formed first noise cancellation winding 623 has two terminals. A first terminal of the first noise cancellation winding 623 is configured to connect an electric potential quiescent point of a secondary circuit of the power conversion circuit or an electric potential quiescent point of a primary circuit of the power conversion circuit, and a second terminal of the first noise cancellation winding 623 floats. The noise cancellation winding layer LB1 on which the second terminal of the first noise cancellation winding 623 is located is a first noise cancellation winding layer, and the noise cancellation winding layer LB2 and the noise cancellation winding layer LB3 are both second noise cancellation winding layers. The first noise cancellation winding layer LB1 is disposed between a first primary winding layer P1 and a first secondary winding layer S1 and is adjacent to each of the first primary winding layer P1 and the first secondary winding layer S1.

In the foregoing embodiment, when the planar transformer is operating, an induced voltage of a noise cancellation winding coil in the first noise cancellation winding layer LB1 of the first noise cancellation winding 623 can be used to cancel or compensate for an induced voltage of the first secondary winding layer S1. In this way, common mode noise generated by the secondary winding or the primary winding is suppressed, and noise suppression performance is improved. Noise cancellation winding coils of the other noise cancellation winding layers LB2 and LB3 connected in series to the first noise winding layer LB1 are configured to increase the induced voltage of the noise cancellation winding coil in the first noise winding layer LB1. Therefore, the first noise winding layer in this application may use a relatively small quantity of coil turns to reach a required induced voltage. In addition, under a same condition, to achieve a same induced voltage, a quantity of coil turns in the first noise winding layer in this embodiment is less than that in the first noise winding layer in FIG. 7.

Optionally, in this application, when the primary winding and the secondary winding are disposed in a sandwiched structure similar to a "sandwich", the primary winding and the secondary winding have two adjacent surfaces, and common mode noise may be generated as long as the primary winding and the secondary winding have adjacent surfaces. Therefore, to further suppress the common mode noise generated by the secondary winding or the primary winding and improve noise suppression performance, a noise cancellation winding may be disposed between the primary winding and the secondary winding that are adjacently disposed.

For example, in this application, the primary winding further includes a second primary winding layer; the secondary winding further includes a second secondary winding layer; and at least one second noise cancellation winding layer is further disposed between the second primary winding layer and the second secondary winding layer. The second noise cancellation winding layer is a noise cancellation winding layer other than the first noise cancellation winding layer in the first noise cancellation winding. That is, an induced voltage of a cancellation winding coil in the second noise cancellation winding layer is used to cancel or compensate for an induced voltage of the second secondary winding layer. In this way, common mode noise generated by the secondary winding or the primary winding is suppressed, and noise suppression performance is improved.

For example, as shown in FIG. 9, a primary winding layer (P) and a secondary winding layer (S) form an SPS stacked structure. A first noise cancellation winding 623 includes a noise cancellation winding layer LB 1 and a noise cancellation winding layer LB2. One terminal of a coil of a noise cancellation winding in the noise cancellation winding layer LB1 is connected in series to one terminal of a coil of a noise cancellation winding in the noise cancellation winding layer LB2 to form the first noise cancellation winding 623, and the formed first noise cancellation winding 623 has two terminals. A first terminal of the first noise cancellation winding 623 is configured to connect an electric potential quiescent point of a secondary circuit of the power conversion circuit or an electric potential quiescent point of a primary circuit of the power conversion circuit, and a second terminal of the first noise cancellation winding 623 floats. The noise cancellation winding layer LB1 on which the second terminal of the first noise cancellation winding 623 is located is a first noise cancellation winding layer, and the noise cancellation winding layer LB2 is a second noise cancellation winding layer. The first noise cancellation winding layer LB1 is disposed between a first primary winding layer P1 and a first secondary winding layer S1 and is adjacent to each of the first primary winding layer P1 and the first secondary winding layer S1. The second noise cancellation winding layer LB2 is disposed between a second primary winding layer P2 and a second secondary winding layer S2, and is adjacent to each of the second primary winding layer P2 and the second secondary winding layer S2.

In the foregoing embodiment, when the planar transformer is operating, an induced voltage of a noise cancellation winding coil in the first noise cancellation winding layer LB1 of the first noise cancellation winding 623 can be used to cancel or compensate for an induced voltage of the first secondary winding layer S1. In this way, common mode noise generated by the secondary winding or the primary winding is suppressed, and noise suppression performance is improved. A noise cancellation winding coil in the second noise cancellation winding layer LB2 connected in series to the first noise winding layer LB1 is configured to increase the induced voltage of the noise cancellation winding coil in the first noise winding layer LB1. Therefore, the first noise winding layer in this application may use a relatively small quantity of coil turns to reach a required induced voltage. In addition, the second noise cancellation winding layer LB2 is disposed between the second primary winding layer P2 and the second secondary winding layer S2, and an induced voltage of a cancellation winding coil in the second noise cancellation winding layer LB2 is used to cancel or compensate for an induced voltage of the second secondary winding layer. In this way, common mode noise generated by the secondary winding or the primary winding is suppressed, and noise suppression performance is improved.

Optionally, when the first noise cancellation winding includes a plurality of second noise cancellation winding layers, only one second noise cancellation winding layer may be disposed between the second primary winding layer and the second secondary winding layer, and certainly, a plurality of second noise cancellation winding layers may also be disposed, which is not limited herein.

When only one second noise cancellation winding layer is disposed between the second primary winding layer and the second secondary winding layer, the second noise cancellation winding layer on which a noise cancellation winding farthest away from the first terminal is located may be disposed between the second primary winding layer and the second secondary winding layer, and is adjacent to each of the second primary winding layer and the second secondary winding layer. This is because, in all second noise cancellation winding layers, at the second noise cancellation winding layer on which the noise cancellation winding farthest away from the first terminal is located, an induced voltage of the noise cancellation winding in the second noise cancellation winding layer is relatively maximum. Therefore, if a same induced voltage is required to be generated, a quantity of coil turns disposed in the second noise cancellation winding layer on which the noise cancellation winding farthest away from the first terminal is located may be minimum. Certainly, during specific implementation, the second noise cancellation winding layer to be disposed between the second primary winding layer and the second secondary winding layer may also be determined based on a magnitude of the common mode noise to be compensated for or canceled. For example, if the common mode noise to be compensated for or canceled is relatively small, the second noise cancellation winding layer on which the first terminal of the first noise cancellation winding is located may also be disposed between the second primary winding layer and the second secondary winding layer, which is not limited herein.

It should be noted that, that the second noise cancellation winding layer is adjacent to each of the second primary winding layer and the second secondary winding layer means that there is no other winding layer between the second noise cancellation winding layer and the second primary winding layer, and that there is no other winding layer between the second noise cancellation winding layer and the second secondary winding layer.

For example, as shown in FIG. 10, a primary winding layer (P) and a secondary winding layer (S) form an SPS stacked structure. A first noise cancellation winding 623 includes a noise cancellation winding layer LB1, a noise cancellation winding layer LB2, and a noise cancellation winding layer LB3. One terminal of a coil of a noise cancellation winding in the noise cancellation winding layer LB1 is connected in series to one terminal of a coil of a noise cancellation winding in the noise cancellation winding layer LB2, and the other terminal of the coil of the noise cancellation winding in the noise cancellation winding layer LB2 is connected in series to one terminal of a coil of a noise cancellation winding in the noise cancellation winding layer LB3, so as to form the first noise cancellation winding 623. The formed first noise cancellation winding 623 has two terminals. A first terminal of the first noise cancellation winding 623 is configured to connect an electric potential quiescent point of a secondary circuit of the power conversion circuit or an electric potential quiescent point of a primary circuit of the power conversion circuit, and a second terminal of the first noise cancellation winding 623 floats. The noise cancellation winding layer LB1 on which the second terminal of the first noise cancellation winding 623 is located is a first noise cancellation winding layer, and the noise cancellation winding layer LB2 and the noise cancellation winding layer LB3 are both second noise cancellation winding layers. The first noise cancellation winding layer LB1 is disposed between a first primary winding layer S1 and a first secondary winding layer P1 and is adjacent to each of the first primary winding layer S1 and the first secondary winding layer P1. The second noise cancellation winding layer LB2 is disposed between a second primary winding layer P2 and a second secondary winding layer S2, and is adjacent to each of the second primary winding layer P2 and the second secondary winding layer S2.

In the foregoing embodiment, when the planar transformer is operating, an induced voltage of a noise cancellation winding coil in the first noise cancellation winding layer LB1 of the first noise cancellation winding 623 can be used to cancel or compensate for an induced voltage of the first secondary winding layer S1. In this way, common mode noise generated by the secondary winding or the primary winding is suppressed, and noise suppression performance is improved. Noise cancellation winding coils in the second noise cancellation winding layers LB2 and LB3 connected in series to the first noise winding layer LB1 are configured to increase the induced voltage of the noise cancellation winding coil in the first noise winding layer LB1. Therefore, the first noise winding layer in this application may use a relatively small quantity of coil turns to reach a required induced voltage. The second noise cancellation winding layer LB2 is disposed between the second primary winding layer P2 and the second secondary winding layer S2, and an induced voltage of a cancellation winding coil in the second noise cancellation winding layer LB2 is used to cancel or compensate for an induced voltage of the second secondary winding layer S2. In this way, common mode noise generated by the secondary winding or the primary winding is suppressed, and noise suppression performance is improved. In addition, a noise cancellation winding coil in the second noise cancellation winding layer LB3 connected in series to the second noise winding layer LB2 may increase the induced voltage of the noise cancellation winding coil in the second noise winding layer LB2. Similarly, the second noise winding layer LB2 may use a relatively small quantity of coil turns to reach a required induced voltage.

When at least two second noise cancellation winding layers are disposed between the second primary winding layer and the second secondary winding layer, if a first terminal of the first noise cancellation winding is configured to connect an electric potential quiescent point of the secondary circuit, the second noise cancellation winding layer on which a noise cancellation winding farthest away from the first terminal is located may be disposed between the second primary winding layer and the second secondary winding layer, and is adjacent to the second primary winding layer. If the first terminal of the first noise cancellation winding is configured to connect the electric potential quiescent point of the primary circuit, the second noise cancellation winding layer on which a noise cancellation winding farthest away from the first terminal is located may be disposed between the second primary winding layer and the second secondary winding layer, and is adjacent to the second secondary winding layer.

For example, as shown in FIG. 11, a primary winding layer (P) and a secondary winding layer (S) form a PSP stacked structure. A first noise cancellation winding 623 includes a noise cancellation winding layer LB1, a noise cancellation winding layer LB2, and a noise cancellation winding layer LB3. One terminal of a coil of a noise cancellation winding in the noise cancellation winding layer LB1 is connected in series to one terminal of a coil of a noise cancellation winding in the noise cancellation winding layer LB2, and the other terminal of the coil of the noise cancellation winding in the noise cancellation winding layer LB2 is connected in series to one terminal of a coil of a noise cancellation winding in the noise cancellation winding layer LB3, so as to form the first noise cancellation winding 623. The formed first noise cancellation winding 623 has two terminals. A first terminal of the first noise cancellation winding 623 is configured to connect an electric potential quiescent point of a secondary circuit of the power conversion circuit or an electric potential quiescent point of a primary circuit of the power conversion circuit, and a second terminal of the first noise cancellation winding 623 floats. The noise cancellation winding layer LB1 on which the second terminal of the first noise cancellation winding 623 is located is a first noise cancellation winding layer LB 1, and the noise cancellation winding layer LB2 and the noise cancellation winding layer LB3 are both second noise cancellation winding layers. The first noise cancellation winding layer LB1 is disposed between a first primary winding layer P1 and a first secondary winding layer SM and is adjacent to each of the first primary winding layer P1 and the first secondary winding layer S1. The second noise cancellation winding layers LB2 and LB3 are disposed between the second primary winding layer P2 and the second secondary winding layer S2.

In the foregoing embodiment, when the planar transformer is operating, an induced voltage of a noise cancellation winding coil in the first noise cancellation winding layer LB1 of the first noise cancellation winding 623 can be used to cancel or compensate for an induced voltage of the first secondary winding layer S1. In this way, common mode noise generated by the secondary winding or the primary winding is suppressed, and noise suppression performance is improved. Noise cancellation winding coils in the second noise cancellation winding layers LB2 and LB3 connected in series to the first noise winding layer LB1 are configured to increase the induced voltage of the noise cancellation winding coil in the first noise winding layer LB1. Therefore, the first noise winding layer in this application may use a relatively small quantity of coil turns to reach a required induced voltage. The second noise cancellation winding layers LB2 and LB3 is disposed between the second primary winding layer P2 and the second secondary winding layer S2, and an induced voltage of a cancellation winding coil in the second noise cancellation winding layer LB2 or LB3 is used to cancel or compensate for an induced voltage of the second secondary winding layer S2. In this way, common mode noise generated by the secondary winding or the primary winding is suppressed, and noise suppression performance is improved.

As an example, a first noise cancellation winding 623 in FIG. 7 includes two noise cancellation winding layers LB1 and LB2. One terminal of a noise cancellation winding coil in the noise cancellation winding layer LB1 floats, the other terminal of the coil in the noise cancellation winding layer LB1 is connected in series to one terminal of a noise cancellation winding coil in the noise cancellation winding layer LB2, and the other terminal of the noise cancellation winding coil in the noise cancellation winding layer LB2 is connected to an electric potential quiescent point of a primary circuit or a secondary circuit. A working principle of the first noise cancellation winding 623 is as follows.

It is assumed that an induced voltage of each turn of coil in the planar transformer is Vo, a capacitance of a noise cancellation winding in the noise cancellation winding layer LB 1 relative to an adjacent secondary winding is Cc1, a quantity of coil turns of the noise cancellation winding in the noise cancellation winding layer LB1 is Nb1, a capacitance of the noise cancellation winding in the noise cancellation winding layer LB1 relative to an adjacent secondary winding is Cc2, and a quantity of coils of the noise cancellation winding in the noise cancellation winding layer LB1 is Nb2.

In the conventional technology, the two noise cancellation winding layers are independent of each other, and one terminal is connected to an electric potential quiescent point, and the other terminal floats. A reverse noise charge Q1 generated by a noise cancellation winding is calculated as follows:

average induced voltage of a noise cancellation winding: $V1 = (0 + Nb1 \times V_0)/2 + (0 + Nb2 \times V_0)/2 = V_0 (Nb1 + Nb2)/2$;
reverse noise current: $i1 = c \times dv/dt$; and
reverse noise charge: $Q1 = i1 \times t = Cc1 \times Nb1 \times V_0/2 + Cc2 \times Nb2 \times V_0/2$.

Based on the solution of this application, a reverse noise charge Q2 generated by a charge cancellation winding is calculated as follows:

average induced voltage of a noise cancellation winding: $V2 = (0 + Nb1 \times V_0)/2 + (Nb1 \times V_0 + Nb2 \times V_0)/2 = V_0 (2Nb 1 + Nb2)/2$;
reverse noise current: $i2 = c \times dv/dt$; and
reverse noise charge: $Q2 = i2 \times t = Cc 1 \times Nb 1 \times V_0/2 + Cc2 \times (Nb 1 \times n + Nb2 \times V_0)/2$.

When a same quantity of turns of the noise cancellation winding are configured, a noise cancellation winding of a series connection structure in this application is compared with a noise cancellation winding of an existing parallel connection structure:
when Nb 1 = Nb2 = Nb, and Cc 1 = Cc2 = Cc,

$$Q1 = Cc \times Nb \times n;$$

and

$$Q2 = Cc \times Nb \times n \times 3/2.$$

It can be seen that compared with the conventional technology, in the case of a same quantity of turns of the noise cancellation winding, the noise cancellation winding in this application generates 1.5 times of the reverse noise charges in the conventional technology. Therefore, it can be deduced that a quantity of turns of the noise cancellation winding in this application may be reduced by 50% when a same quantity of reverse noise charges is generated.

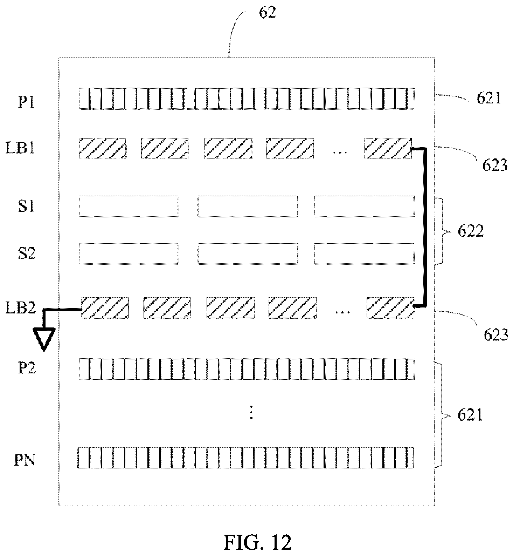

Further, in this application, as shown in FIG. 12 to FIG. 14, a coil turn width of the noise cancellation winding at the first noise cancellation winding layer LB1 is greater than that of the noise cancellation winding at the second noise cancellation winding layer LB2. That is, a coil turn width in the noise cancellation winding layer on which the second terminal of the first noise cancellation winding 623 is located is designed to be wider, and in comparison, a coil turn width in the noise cancellation winding layer on which the first terminal of the first noise cancellation winding 623 is located is designed to be narrower. In this way, a quantity of coil turns of the first noise cancellation winding can be further reduced. The following describes a working principle of the first noise cancellation winding in the foregoing embodiment with reference to a principle.

It is assumed that an induced voltage of each turn of coil in a transformer is V0. The first terminal of the first noise cancellation winding is connected to the electric potential quiescent point of the primary circuit or the secondary circuit, and a voltage of a first turn of coil connected to the first terminal is V0. Starting from the first turn of coil connected to the first terminal, each turn of coil is defined as a second turn of coil, a third turn of coil, ..., and an $n^{th}$ turn of coil in sequence. Because each turn of coil is of a series structure, an induced voltage of the $n^{th}$ turn of coil is nV0. Therefore, it can be learned that a coil farther away from the first terminal (or a turn closer to the second terminal) has a higher induced voltage. In this way, if a turn width of a coil close to the second terminal is larger, a parasitic capacitance between this part of the noise cancellation winding and an adjacent secondary winding or primary winding is larger, and therefore, more reverse noise charges are generated by this part of the noise cancellation winding. Therefore, when a quantity of coil turns of the noise cancellation winding remains unchanged, more reverse noise charges can be obtained by increasing the coil turn width. Similarly, when a specified quantity of reverse noise charges are generated, a quantity of coil turns of the noise cancellation winding may be further reduced.

In a possible implementation, as shown in FIG. 12, coil turn widths of a noise cancellation winding in the first noise cancellation winding layer LB1 are the same.

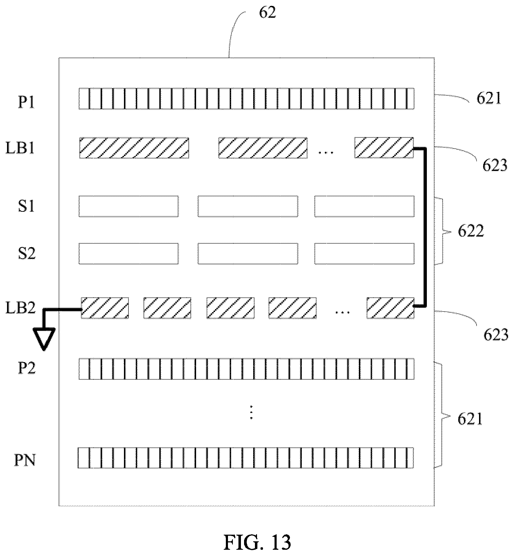

In a possible implementation, as shown in FIG. 13, in the first noise cancellation winding layer LB1, a coil of a noise cancellation winding closer to the second terminal has a larger coil turn width.

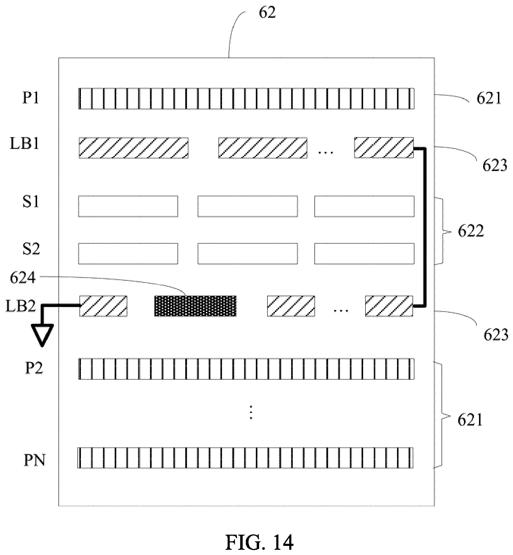

Optionally, in this application, as shown in FIG. 14, the PCB winding board 62 further includes an auxiliary winding 624, and the auxiliary winding 624 may be disposed on at least one second noise cancellation winding layer. Because the second noise cancellation winding layer is mainly configured to increase an induced voltage of a coil in the first noise cancellation winding layer, disposing the auxiliary winding 624 in the second noise cancellation winding layer does not affect the first noise cancellation winding layer. In addition, a quantity of winding layers in the PCB winding board 62 may be reduced, and space utilization of a planar transformer is improved, thereby reducing costs of the planar transformer.

In specific implementation, the auxiliary winding 624 may be any type of winding other than the noise cancellation winding, which is not limited herein.

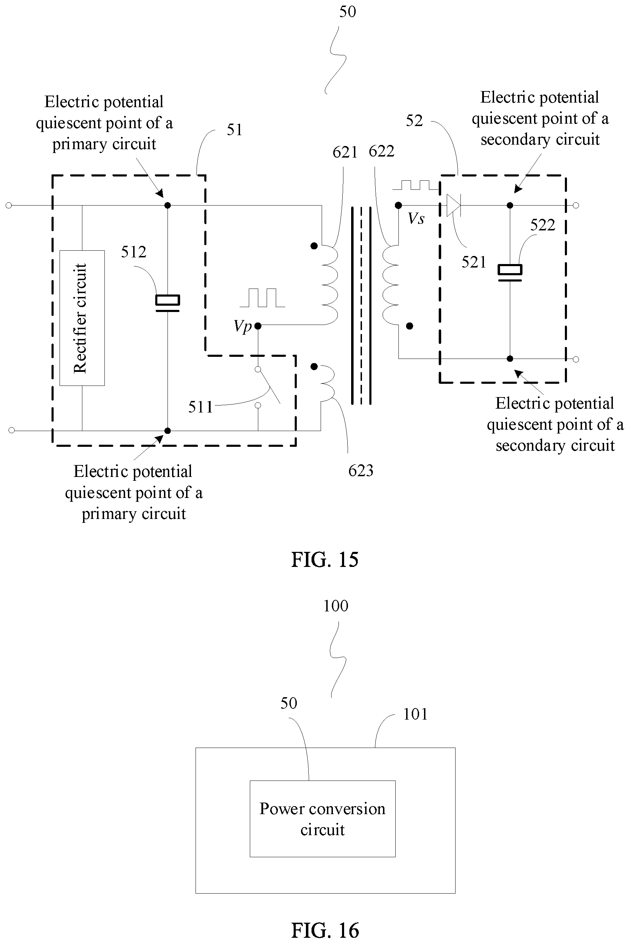

FIG. 15 is a schematic diagram of a connection relationship between a power conversion circuit 50 and a planar transformer 60 according to an embodiment of this application. As shown in FIG. 15, a primary circuit 51 includes a primary switching transistor 511, a primary filter capacitor 512, and a rectifier circuit. The secondary circuit 52 includes a secondary rectifier 521 and a secondary filter capacitor 522. The primary filter capacitor 512 and the secondary filter capacitor 522 may be electrolytic capacitors. Usually, a node connected to either of two terminals of the primary filter capacitor 512 is an electric potential quiescent point of the primary circuit, or a ground node of the primary circuit may be an electric potential quiescent point of the primary circuit. A node connected to either of two terminals of the secondary filter capacitor 522 is an electric potential quiescent point of the secondary circuit.

As shown in FIG. 15, one terminal of the primary winding 621 is configured to connect a primary electric potential quiescent point of the power conversion circuit 50. One terminal of the secondary winding 622 is configured to connect a secondary electric potential quiescent point of the power conversion circuit. For example, two terminals of the primary winding 621 may be respectively connected to the primary switching transistor 511 and the primary filter capacitor 512, and two terminals of the secondary winding 622 are respectively connected to the secondary rectifier 521 and the secondary filter capacitor 522. A first terminal of the first noise cancellation winding 623 is configured to connect an electric potential quiescent point of a primary circuit or an electric potential quiescent point of a secondary circuit of the power conversion circuit 50, and a second terminal of the first noise cancellation winding 623 may float. The floating may mean that the second terminal of the first noise cancellation winding 623 is not electrically connected to any conductor, and is not electrically connected to any element. For example, the first terminal of the first noise cancellation winding 623 may be connected to the primary filter capacitor 512.

With reference to FIG. 16, an embodiment of this application further provides an adapter 100. The adapter 100 may include a housing 101 and a power conversion circuit 50 disposed in the housing 101. A problem solving principle of the adapter is similar to that of the foregoing power conversion circuit. Therefore, for implementation of the adapter, refer to the implementation of the foregoing power conversion circuit, and details are not described again.

According to the planar transformer, the power conversion circuit, and the adapter provided in the embodiments of this application, a first noise cancellation winding is disposed between a primary winding and a secondary winding of the planar transformer, and a quantity of coil turns of each noise cancellation winding layer in the first noise cancellation winding is designed so that when the planar transformer is operating, an induced voltage of a noise cancellation winding in a first noise cancellation winding layer can be used to cancel or compensate for an induced voltage of a first secondary winding layer. In this way, common mode noise generated by the secondary winding or the primary winding is suppressed, and noise suppression performance is improved. In addition, the coils of the noise cancellation windings in the at least two noise cancellation winding layers are sequentially connected in series to form the first noise cancellation winding, and the first noise winding layer disposed between the first primary winding layer and the first secondary winding layer is the noise cancellation winding layer on which the second terminal of the first noise cancellation winding is located. In this way, noise cancellation winding coils that are of another noise cancellation winding layer in the first noise cancellation winding and that are connected in series to the first noise winding layer are used to increase the induced voltage of the noise cancellation winding coil in the first noise winding layer. Therefore, compared with the conventional technology, the first noise winding layer in this application may use a relatively small quantity of coil turns to reach a required induced voltage.

Persons of ordinary skill in the art may be aware that, in combination with the examples described in the embodiments disclosed in this specification, units and algorithm steps may be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of the present application.

Persons skilled in the art can clearly understand that for convenience and brevity of description, reference may be made to the corresponding processes in the foregoing method embodiments for specific working processes of the system, apparatus, and units described above. Details are not described herein again.

In several embodiments provided herein, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A planar transformer, comprising a magnetic core and a printed circuit board PCB winding board, wherein the PCB winding board comprises:

   a primary winding, comprising a first primary winding layer;
   a secondary winding, comprising a first secondary winding layer; and
   a first noise cancellation winding, comprising at least two noise cancellation winding layers, wherein coils of a noise cancellation winding in the at least two noise cancellation winding layers are sequentially connected in series to form the first noise cancellation winding;
   a first terminal of the first noise cancellation winding is configured to connect an electric potential quiescent point of a secondary circuit of a power conversion circuit or an electric potential quiescent point of a primary circuit of the power conversion circuit, and a second terminal of the first noise cancellation winding floats; and
   the noise cancellation winding layer on which the second terminal of the first noise cancellation winding is located is a first noise cancellation winding layer, the first noise cancellation winding layer is disposed between the first primary winding layer and the first secondary winding layer, and when the first terminal of the first noise cancellation winding is configured to connect the electric potential quiescent point of the secondary circuit, the first noise cancellation winding layer is adjacent to the first primary winding layer, or when the first terminal of the first noise cancellation winding is configured to connect the electric potential quiescent point of the primary circuit, the first noise cancellation winding layer is adjacent to the first secondary winding layer.

2. The planar transformer according to claim 1, wherein a noise cancellation winding layer other than the first noise cancellation winding layer in the first noise cancellation winding is a second noise cancellation winding layer.

3. The planar transformer according to claim 2, wherein the primary winding further comprises a second primary winding layer;

   the secondary winding further comprises a second secondary winding layer; and
   at least one second noise cancellation winding layer is disposed between the second primary winding layer and the second secondary winding layer.

4. The planar transformer according to claim 3, wherein the second noise cancellation winding layer on which a noise cancellation winding farthest away from the first terminal is located is disposed between the second primary winding layer and the second secondary winding layer, and is adjacent to each of the second primary winding layer and the second secondary winding layer.

5. The planar transformer according to claim 3, wherein the second noise cancellation winding layer on which the first terminal is located is disposed between the second primary winding layer and the second secondary winding layer, and is adjacent to each of the second primary winding layer and the second secondary winding layer.

6. The planar transformer according to any one of claims 2 to 5, wherein a coil turn width of a noise cancellation winding in the first noise cancellation winding layer is greater than a coil turn width of a noise cancellation winding in the second noise cancellation winding layer.

7. The planar transformer according to claim 6, wherein coil turn widths of the noise cancellation winding in the first noise cancellation winding layer are the same.

8. The planar transformer according to claim 6, wherein in the first noise cancellation winding layer, a coil of a noise cancellation winding closer to the second terminal has a larger coil turn width.

9. The planar transformer according to any one of claims 2 to 5, wherein the PCB winding board further comprises an auxiliary winding, and the auxiliary winding is disposed on the at least one second noise cancellation winding layer.

10. The planar transformer according to any one of claims 1 to 5, wherein the primary winding is disposed on two sides of the secondary winding, or the secondary winding is disposed on two sides of the primary winding.

11. A power conversion circuit, comprising a primary circuit, a secondary circuit, and a planar transformer according to any one of claims 1 to 10, wherein the planar transformer is disposed between the primary circuit and the secondary circuit.

12. An adapter, comprising a housing and the power conversion circuit according to claim 11, wherein the power conversion circuit is disposed in the housing.

12

11

13

Adapter

+

−

FIG. 1

20

21

23

22

Primary circuit

Secondary circuit

FIG. 2

FIG.3

FIG. 4

FIG. 5

FIG. 6

FIG. 7

FIG. 8

62

S1 ——— 622

LB1 —— 623

P1

—— 621

P2

LB2

S2 —— 622

**FIG. 9**

FIG. 10

FIG. 11

FIG. 12

FIG. 13

FIG. 14

50

Electric potential
quiescent point of a
primary circuit

51

621 622

52

Electric potential
quiescent point of a
secondary circuit

Rectifier circuit

512

*Vs*

522

*Vp*

521

511

*Vp*

Electric potential
quiescent point of a
primary circuit

623

Electric potential
quiescent point of a
secondary circuit

FIG. 15

100

50

101

Power conversion
circuit

FIG. 16

## INTERNATIONAL SEARCH REPORT

International application No.

**PCT/CN2021/103099**

### A. CLASSIFICATION OF SUBJECT MATTER

H01F 27/38(2006.01)i; H02M 1/44(2007.01)i

According to International Patent Classification (IPC) or to both national classification and IPC

### B. FIELDS SEARCHED

Minimum documentation searched (classification system followed by classification symbols)

H01F 27/-,H02M 1/-

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 平面, 变压器, 绕组, 线圈, 共模, 干扰, 噪声, 屏蔽, 抵消, 抑制, 补偿, 串联, planar, transformer, wind+, coil?, common mode, noise, interfer+, shield+, balanc+, preven+, inhibit+, compensat+, in serial

### C. DOCUMENTS CONSIDERED TO BE RELEVANT

| Category* | Citation of document, with indication, where appropriate, of the relevant passages | Relevant to claim No. |
|---|---|---|
| Y | CN 110310815 A (HUAWEI TECHNOLOGIES CO., LTD.) 08 October 2019 (2019-10-08) description paragraphs 67-124, figures 1-8 | 1-5, 9-12 |
| A | CN 110310815 A (HUAWEI TECHNOLOGIES CO., LTD.) 08 October 2019 (2019-10-08) description paragraphs 67-124, figures 1-8 | 6-8, 11, 12 |
| Y | CN 103474210 A (TECH-POWER ELECTRIC (SHENZHEN) CO., LTD.) 25 December 2013 (2013-12-25) description, paragraphs 7-32, and figures 1-3 | 1-5, 9-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 September 2021** | **09 October 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/103099**

| Patent document cited in search report | | | Publication date (day/month/year) | Patent family member(s) | | | Publication date (day/month/year) |
|---|---|---|---|---|---|---|---|
| CN | 110310815 | A | 08 October 2019 | WO | 2020248672 | A1 | 17 December 2020 |
| CN | 103474210 | A | 25 December 2013 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011174200